# EUROPÄISCHE PATENTSCHRIFT

(11) **EP 0 522 393 B1**
(45) Veröffentlichungstag und Bekanntmachung des Hinweises auf die Patenterteilung: **07.01.1998**
(21) Anmeldenummer: 92110955.9
(22) Anmeldetag: 29.06.1992
(51) Int. Cl.: A01N 47/16, A01N 47/18

(54) **Mikrobizide Wirkstoffkombinationen**
Microbicidal compositions
Compositions microbicides

(30) Priorität: 11.07.1991 DE 4122868
(43) Veröffentlichungstag der Anmeldung: 13.01.1993
(73) Patentinhaber: BAYER AG, 51368 Leverkusen (DE)
(72) Erfinder: Ludwig, Georg-Wilhelm, Dr., W-4150 Krefeld (DE); Exner, Otto, Dr., W-4030 Ratingen 1 (DE); Schmitt, Hans-Georg, Dr., W-4150 Krefeld 1 (DE); Büchel, Karl Heinz, Prof. Dr., W-5093 Burscheid (DE); Holmwood, Graham, Dr., W-5600 Wuppertal 11 (DE)

(56) Entgegenhaltungen:
- AT-B- 367 974
- AT-B- 393 437
- DE-A- 3 037 855
- CHEMICAL ABSTRACTS, Band 115, Nr. 1, 8. Juli 1991, Columbus, Ohio, USA, J. GORSKA-PACZOPKO et al., Seite 324, Zusammenfassung-Nr. 3160f

## Beschreibung

Die vorliegende Erfindung betrifft die Verwendung von mikrobiziden Wirkstoffkombinationen aus bekannten Azol- und Benzimidazol-Derivaten zum Schutz von technischen Materialien.

Imidazol- und Triazolfungizide, wie z.B. das α-[2-(4-Chlorphenyl)-ethyl)-α-(1,1-dimethyl-ethyl)]1H-1,2,4-triazol-1-ethanol (Tebuconazol) und das 1-[[2-(2,4-Di-chlorphenyl)-4-n-propyl-1,3-dioxolan-2-yl]-methyl-]-1H-1,2,4-triazol (Propiconazol) und deren Verwendung zum Schutz von Pflanzen und Saatgut sind bekannt (vgl. z.B. EP-A-0 040 345, EP-A 0 052 424). Weiterhin ist bekannt, daß diese Verbindungen auch zum Schutz vor Mikroben in technischen Materialien eingesetzt werden können (vgl. DE-OS 3 905 378, DE-OS 3 621 494).

Weiterhin ist bekannt, daß Benzimidazolderivate wie Benzimidazolylcarbaminsäuremethylester (BCM, Carbendazim), Methyl-1-(butylcarbamoyl)-2-benzimidazol-carbamat (Benomyl), 2-(2'-Furyl)-1H-benzimidazol (Fuberidazol) und 2-(4'-Thiazolyl)-benzimidazol (Thiabendazol) eine fungizide Wirksamkeit aufweisen (Farm Chemicals Handbook). Diese können auch im Materialschutz Verwendung finden.

Nachteil dieser beiden Verbindungsklassen ist, daß deren Wirkhöhe und Wirkspektrum nicht immer zum Schutz von technischen Materialien, insbesondere nicht zum Schutz von Kunststoffen ausreicht, da es, bedingt durch die erforderlichen hohen Aufwandmengen z.B. zu Veränderungen der Kunststoffe kommt.

Es wurde nun gefunden, daß Wirkstoffkombinationen aus mindestens einem Azol-Derivat, vorzugsweise
1-(4-Chlorphenoxy)-3,3-dimethyl-1-(1H-1,2,4-triazo-1-yl)-2-butanon (Triadimefon), β-(4-Chlorphenoxy)-α-(1,1-dimethyl-ethyl)-1H-1,2,4-triazol-1-ethanol (Triadimenol), ±-α-[2-(4-Chlorphenyl)-ethyl]-α-(1,1-dimethylethyl)-1H-1,2,4-triazol-1-ethanol (Tebuconazol), (RS)-2-(2,4-Dichlorphenyl)-1-(1H-1,2,4-triazol-1-yl)-hexan-2-ol (Hexaconazole), 1-(N-propyl-N-(2-(2,4,6-(trichlorphenoxy)-ethyl)-carbamoyl)-imidazol (Prochloraz), 1-(2-Chlorphenyl)-2-(1-chlorcyclopropyl)-3-(1,2,4-triazol-1-yl)-propan-2-ol, deren Metallsalze oder Säureadditionsverbindungen und in den Fällen, wo die Verbindung ein asymmetrisches Kohlenstoffatom hat, auch die Isomeren und Isomerengemische der verschiedensten Zusammensetzungen;
ganz besonders bevorzugt das ± α-[2-(4-Chlorphenyl)-ethyl)-α-(1,1-dimethylethyl)]1H-1,2,4-triazol-1-ethanol (Tebuconazol)
mit mindestens einem Benzimidazol-Derivat der Formel (I) 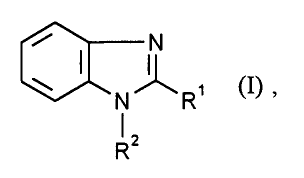 in welcher
- R¹: für Carbaminsäureestergruppen, gegebenenfalls weiter substituierte Furyl- oder Thiazolylringe und
- R²: für H oder Carbaminsäureestergruppen steht,
eine besonders hohe mikrobizide Wirksamkeit aufweisen und als Mikrobizide zum Schutz von technischen Materialien verwendet werden können.

Als Benzimidazol-Derivate seien vorzugsweise genannt:
Benzimidazolylcarbaminsäure-methylester (BCM), Methyl-1-(butylcarbamoyl)-2-Benzimidazolcarbamat (Benomyl), 2-(2'-Furyl)-1H-benzimidazol und 2-(4'-Thiazolyl)benzimidazol.

Besonders bevorzugt ist der Benzimidazolylcarbaminsäuremethylester (BCM).

Ganz besonders hervorzuheben ist die Kombination aus Tebuconazol und BCM.

Die Azol- und die Benzimidazolderivate können nicht nur in Form von freien Basen sondern vorzugsweise auch in Form ihrer Metallsalz-Komplexe oder als Säureadditions-Salze vorliegen. Als Metallsalz kommen vorzugsweise Salze von Metallen der II. bis IV. Hauptgruppe und der I. und II. sowie IV. bis VII. Nebengruppe des Periodensystems in Frage, wobei Kupfer, Zink, Mangan, Magnesium, Zinn, Eisen, Calcium, Aluminium, Blei, Chrom, Kobalt und Nickel, beispielhaft genannt seien.

Als Anionen der Salze kommen solche in Betracht, die sich vorzugsweise von folgenden Säuren ableiten: Halogenwasserstoffsäuren, wie z.B. Chlorwasserstoffsäure und Bromwasserstoffsäure, ferner Phosphorsäure, Salpetersäure und Schwefelsäure.

Die Metallsalz-Komplexe können in einfacher Weise nach üblichen Verfahren erhalten werden, so z.B. durch Lösen des Metallsalzes in Alkohol, z.B. Ethanol und Hinzufügen zum Azol- bzw. Benzimidazolderivat. Man kann Metallsalz-Komplexe in bekannter Weise, z.B. durch Abfiltrieren isolieren und gegebenenfalls durch Umkristallisieren reinigen.

Zur Herstellung von Säureadditionssalzen kommen vorzugsweise folgende Säuren in Frage: Die Halogenwasserstoffsäuren, wie z.B. Chlorwasserstoffsäure und Bromwasserstoffsäure, insbesondere Chlorwasserstoffsäure, ferner Phosphorsäure, Salpetersäure, Schwefelsäure, mono- und bifunktionelle Carbonsäuren und Hydroxycarbonsäuren, wie z.B. Essigsäure, Propionsäure, Buttersäure, Mandelsäure, Oxalsäure, Bernsteinsäure, 2-Hydroxy-ethan-dicarbonsäure, Maleinsäure, Fumarsäure, Weinsäure, Citronensäure, Salicylsäure, Sorbinsäure, Milchsäure sowie Sulfonsäuren, wie z.B. p-Toluolsulfonsäure, 1,5-Naphthalindisulfonsäure, Alkansulfonsäuren und gegebenenfalls substituierte Benzoesäuren.

Die Säureadditions-Salze der Verbindungen können in einfacher Weise nach üblichen Salzbildungsmethoden, z.B. durch Lösung einer Verbindung in einem geeigneten inerten Lösungsmittel und Hinzufügen der Säure, z.B. Chlorwasserstoffsäure, erhalten werden und in bekannter Weise, z.B. durch Abfiltrieren, isoliert und gegebenenfalls durch Waschen mit einem inerten organischen Lösungsmittel gereinigt werden.

Die Gewichtsverhältnisse der Wirkstoffe in den Wirkstoffkombinationen können in relativ großen Bereichen variiert werden.

Die Mischungen enthalten die Azolkomponente in Mengen von 1 bis 99 Gew.-%, der Rest zu 100 % ist die Benzimidazolkomponente.

Das Mischungsverhältnis Azolkomponente zu Benzimidazolkomponente ist vorzugsweise 1 : 9 bis 9 : 1, besonders bevorzugt 2 : 8 bis 8 : 2 Gewichtsteile.

Die Wirkstoffkombinationen weisen eine starke Wirkung gegen Mikroorganismen auf. Die erfindungsgemäßen Wirkstoffkombinationen werden im Materialschutz zum Schutz technischer Materialien verwendet; sie sind vor allem wirksam gegen Schimmelpilze, kunststoffverfärbende und kunststoffzerstörende Pilze und Bakterien. Beispielhaft seien die folgenden Gattungen von Mikroorganismen genannt:
Alternaria wie Alternaria tenuis, Aspergillus wie Aspergillus niger und Aspergillus terreus, Aureobasidium wie Aureobasidium pullulans, Chaetomium wie Chaetomium globosum, Cladosporium wie Cladosporium herbarum, Coniophora wie Coniophora puteana, Gliocladium wie Gliocladium virens, Lentinus wie Lentinus tigrinus, Paecilomyces wie Paecilomyces varioti, Penicillium wie Penicillium brevicaule, Penicillium glaucum und Penicillium pinophilum, Polyporus wie Polyporus versicolor, Sclerophoma wie Sclerophoma pityophila, Streptoverticillium wie Streptoverticillium reticulum, Trichoderma wie Trichoderma viride, Trichophyton wie Trichophyton mentagrophytes;
Escherichia wie Escherichia coli, Pseudomonas wie Pseudomonas aeruginosa, Staphylococcus wie Staphylococcus aureus;
Candida wie Candida albicans.

Die Menge der eingesetzten Wirkstoffkombinationen ist von der Art und dem Vorkommen der Mikroorganisme, der Keimzahl und von dem Medium abhängig. Die optimale Einsatzmenge kann bei der Anwendung jeweils durch Testreihen ermittelt werden. Im allgemeinen ist es jedoch ausreichend 0,001 bis 5 Gew.-%, vorzugsweise 0,05 bis 2 Gew.-% der Wirkstoffgemische, bezogen auf das zu schützende Material, einzusetzen.

Die Wirkstoffkombinationen können als solche, in Form von Konzentraten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B. durch Vermischen der Wirkstoffe mit einem Lösungs- bzw. Verdünnungsmittel sowie gegebenenfalls weiteren Verarbeitungshilfsmitteln wie z.B. Emulgatoren und Dispergatoren.

Als Lösungs- bzw. Verdünnungsmittel kommen vorzugsweise alle für die Verarbeitung von Kunststoffen verwendeten Lösungs- bzw. Verdünnungsmittel in Frage.

Unter Kunststoffen wird hierbei eine Vielzahl unterschiedlicher polymerer Stoffe verstanden wie thermoplastische Polymere, Duroplaste, Elastomere sowie natürlich vorkommende Polymere.

Thermoplaste umfassen Polyolefine wie z.B. Polyethylen, Polypropylen und Polybutylen, Polyvinylchlorid(-modifikationen), Polystyrol und Styrol-Copolymerisate, Acrylstyrol und Styrol-Copolymerisate, Acrylharze, Fluorpolymere, Polyamide, Polycarbonate, Polyester wie z.B. Polyethylenterephthalat, Polyethylennaphthalat, lineare Epoxidharze und Blends hieraus.

Duroplaste umfassen Formaldehydharze wie z.B. Phenol-Formaldehydharze, ungesättigte Polyesterharze, Silikonharze, Polyimide, Epoxidharze und vernetzte Polyurethane wie PUR-Schäume, PUR-Gießharze, PUR-Lacke und PUR-Klebstoffe, Elastomere sind Kautschuke wie z.B. Naturkautschuke, Isoprenkautschuk, Styrol-Butadienkautschuk, Butadien- und Chloroprenkautschuk sowie Polyurethan-Elastomere.

Die Einarbeitung der Wirkstoffkombinationen erfolgt in allgemein üblicher Art und Weise z.B. durch Vermischen der Wirkstoffkombination oder der einzelnen Wirkstoffkomponenten mit den für die Polymerisation notwendigen Ausgangsstoffen, Lösungsmitteln und/oder Additiven.

Ferner richtet sie sich vorteilhafterweise nach der Art und Herstellungsweise des jeweiligen Kunststoffmaterials. Ohne zu limitieren seien hier z.B. genannt die Einarbeitungen in PVC-Systeme und Polyurethansysteme.

Im Falle von PVC-Systemen erfolgt die Einarbeitung vorteilhaft durch direkte Zugabe der Wirkstoffkombination als solche bei der Compoundierung. Alternativ können die Wirkstoffkomponente oder die Wirkstoffkombination als "Masterbatch" in mit dem System verträglichen Lösemitteln oder in einem der verwendeten Weichmacher oder sonstigen geeigneten Additiven eingesetzt werden.

Als Lösemittel kommen beispielsweise in Frage: Aliphatische und araliphatische Alkohole wie z.B. Isodecylalkohol, 2-Ethylhexanol, 2-Ethyl-1,3-hexandiol, Benzylalkohol, Phenethylalkohol und Phenoxyethanol.

Beispiele für Weichmacher sind Phthalsäureester wie z.B. Di-(2-ethylhexyl)-phthalat, Dicyclohexylphthalat, Diisobutylphthalat, Diisodecylphthalat, gemischte n-Alkylphthalate, Butylbenzylphthalat, Di-n-octylphthalat, Di-n-decylphthalat, Phosphorsäureester wie z.B. Tricresylphosphat, Diphenylcresylphosphat, Alkylaryl-phosphate, Carbonsäureester wie Dioctyladipat, Dipropylenglykoldibenzoat, Dioctylazelat, epoxydiertes Sojabohnenöl.

Im Falle von Polyurethansystemen erfolgt die Einarbeitung vorteilhaft vor der Polymerisation durch direkte Zugabe der Wirkstoffkombination zu einer Komponente. Alternativ können die Komponenten des Polyurethan-Systems wie Polyole, Isocyanat-Komponenten oder Vernetzersysteme mit der Wirkstoffkombination ausgerüstet werden. Prinzipiell können die einzelnen Komponenten des Wirkstoffgemischs auch in verschiedenen Bestandteilen des Polyurethan-Systems vorgelegt werden.

Die Wirksamkeit und das Wirkungsspektrum der Wirkstoffkombinationen bzw. den daraus herstellbaren Mitteln, Konzentraten oder ganz allgemein Formulierungen kann erhöht werden, wenn gegebenenfalls weitere antimikrobiell wirksame Verbindungen, Fungizide, Bakterizide, Herbizide, Insektizide oder andere Wirkstoffe zur Vergrößerung des Wirkungssprektrums oder Erzielung besonderer Effekte wie z.B. dem zusätzlichen Schutz von Insekten zugesetzt werden. Diese Mischungen können ein breiteres Wirkungsspektrum besitzen als die erfindungsgemäßen Verbindungen.

In vielen Fällen erhält man dabei synergistische Effekte, d.h. die Wirksamkeit der Mischung ist größer als die der Wirksamkeit der Einzelkomponenten. Besonders günstige Mischungpartner sind z.B. die folgenden Verbindungen:
Sulenamide wie Dichlorfluanid (Euparen), Tolylfluanid (Methyleuparen), Folpet, Fluorfolpet;
Thiocyanate wie Thiocyanatomethylthiobenzothiazol (TCMTB), Methylenbisthiocyanat (MBT);
quartäre Ammoniumverbindungen wie Benzyldimethyltetradecylammoniumchlorid, Benzyl-dimethyl-dodecyl-ammoniumchlorid, Didecyl-dimethylamminiumchlorid;
Morpholinderivate wie C₁₁-C₁₄-4-Alkyl-2,6-dimethylmorpholin-homologe (Tridemorph),Falimorph, (±)-cis-4-[3-tert.-Butylphenyl)-2-methylpropyl]-2,6-dimethylmorpholin (Fenpropimorph), Carbamorph;
Phenole wie o-Phenylphenol, Tribromphenol, Tetrachlorphenol, Pentachlorphenol, 3-Methyl-4-chlorphenol, Dichlorophen, Chlorophen oder deren Salze;
Iodpropargylderivate wie Iodpropargyl-butylcarbamat (IPBC), -chlorophenylformal, -phenylcarbamat, -hexylcarbamat, -cyclohexylcarbamat, Iodpropargyloxyethyl-Iodderivate wie Diodmethyl-p-arylsulfone z.B. Diiodmethyl-p-tolylsulfon;
Bromderivate wie Bronopol;
Isothiazolinone wie N-Methylisothiazolin-3-on, 5-Chloro-N-methylisothiazolin-3-on, 4,5-Dichloro-N-octylisothiazolin-3-on, N-Octylisothiazolin-3-on (Octhilinone);
Benzisothiazolinone, Cyclopentenisothiazolinone;
Pyridine wie 1-Hydroxy-2-pyridinthion (und ihre Na-, Fe-, Ma, Zn-Salze), Terachlor-4-methylsulfphonylpyridin;
Metallseifen wie Zinn-, Kupfer-, Zinn-napthenat, -octoat, -2-ethylhexanoat, -oleat, -phosphat, -benzoat, Oxide wie TBTO, Cu₂O, CuO, ZnO;
organische Zinnverbindungen wie Tributylzinn-naphthenat und Tributylzinnoxid;
Dialkyldithiocarbamate wie Na- und Zn-Salze von Dialkyldithiocarbamaten, Tetramethyldiuramdisulfit (TMTD);
Nitrile wie 2,4,5,6-Tetrachlorisophthalonitril (Chlorthalonil) u.a. Mikrobizide mit aktivierten Halogengruppen wie Cl-Ac, MCA, Tectamer, Bronopol, Bromidox;
Benzthiazole wie 2-Mercaptobenzothiazol; s.o. Dazomet;
Chinoline wie 8-Hydroxychinolin oder dessen halogenierte Derivate wie Haloquinal, Broxychinolin oder Cliogrinal;
Formaldehydabspaltende Verbindungen wie Benzylalkoholmono(poly)hemiformal, Oxazolidine, Hexahydro-s-triazine, N-Methylolchloracetamid;
Tris-N-(Cyclohexyldiazeniumdioxy)-Aluminium, N-(Cyclohexyldiazeniumdioxy)-Tributylzinn bzw. K-Salze, Bis-(N-cyclohexyl)diazinium(dioxy-Kupfer oder Aluminium):
Schwefel und Schwefelprodukte wie z.B. anorganische Polysulfide, Schwefel, Azithiram.

Als Insektizide werden bevorzugt zugesetzt:
Phosphorsäureester wie Azinphos-ethyl, Azinphos-methyl, 1-(4-Chlorphenyl)-4-(O-ethyl, S-propyl)phosphoryloxypyrazol (TIA-230), Chlorpyrifos, Coumaphos, Demeton, Demeton-S-methyl, Diazinon, Dichlorvos, Dimethoate, Ethoprophos, Etrimfos, Fenitrothion, Fenthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichlorphon:
Carbamate wie Aldicarb, Bendiocarb, BPMC (2-(1-Methylpropopyl)phenylmethyl-carbamat), Butocaboxim, Butoxicarboxim, Darbaryl, Carbofuran, Carbosulfan, Cloethocarb, Isoprocarb, Methomyl, Oxamyl, Pirimicarb, Promecarb, Propoxur und Thiodicarb;
Pyrethroide wie Allethrin, Alphamethrin, Bioresmethrin, Byfenthrin (FMC 54 800), Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluormethylvinyl)cyclopropancarboxylat, Fenpropathrin, Fenfluthrin, Fenvalerate, Flucythrinate, Flumethrin, Fluvalinate, Permethrin und Resmethrin;
Nitroimino und Nitromethylene wie 1-[(6-Chlor-3-pyridinyl)-methyl]-4,5-dihydro-N-nitro-1H-imidazol-2-amin (Imidacloprid).

Als andere Wirkstoffe kommen auch in Betracht Algizide, Molluskizide, Wirkstoffe gegen "sea animals", die sich auf z.B. Schiffsbodenanstrichen ansiedeln.

Die zum Schutz der technischen Materialien verwendeten mikrobiziden Mittel oder Konzentrate enthalten die erfindungsgemäßen Wirkstoffkombinationen in einer Konzentration von 0,01 bis 95 Gew.-%, insbesondere 0,01 bis 60 Gew.-%, daneben gegebenenfalls 0,001 bis 10 Gew.-% eines geeigneten weiteren Fungizids, Insektizids oder eines weiteren Wirkstoffs wie oben genannt.

Die nachfolgenden Beispiele dienen zur Erläuterung der Erfindung Teile und Prozentangaben bedeuten Gewichtsteile bzw. Gewichtsprozente.

### Beispiel A

1. Synergistisches Fungizidgemisch aus Tebuconazol und Benzimidazolylcarbaminsäuremethylester (BCM)
   80 Gew.-Teile Tebuconazol und 20 Gew.-Teile BCM werden als Feststoffe innig vermischt oder in einer geeigneten Mühle zusammen vermahlen. Es resultiert das synergistische Fungizidgemisch als weißes Pulver.
   Analog können Gemische der übrigen Mischungsverhältnisse der Komponenten hergestellt werden.
2. Synergistische Wirksamkeit der erfindungsgemäßen Wirkstoffe gegen kunststoffzerstörende Pilze.
   Die synergistische Wirksamkeit der erfindungsgemäßen Wirkstoffmischungen kann durch den Vergleich der Wirksamkeit der reinen Wirkstoffe mit denen der Gemische erfolgen.

### Herstellung des Prüfmaterials:

1 % der Wirkstoffkombination wird bei Raumtemperatur in den zur Polyurethanherstellung verwendeten Polyesterpolyol eingerührt. Nach Zugabe des Vernetzers wird mit der Isocyanatkomponente umgesetzt. Es resultiert eine 1 cm dicke Platte aus PU-Schaum.

Zur mikrobiologischen Untersuchung wird die Platte auf 2 mm Dicke gespalten und eine mikrobiologische Prüfung nach Schweizer Prüfnorm SNV 195921 durchgeführt.

Hierzu werden runde Prüfkörper ausgestanzt (⌀ 3 cm). Diese werden nach Sterilisieren auf einen Agar aufgelegt, der aus einer unteren, nicht kontaminierten und einer oberen, kontaminierten Agarschicht besteht. Bei 26°C wird 4 Wochen bebrütet.

### Auswertung:

Das Ausmaß des Bewuchses der Prüfkörper durch die Mikroorganismen sowie die Größe der bewuchsfreien Zone um den Prüfkörper (Hemmhof) sind ein Maß für die mikrobiologische Wirksamkeit (s. folgendes Bewertungsschema).

Das Ergebnis für das synergistische Fungizidgemisch aus 80 % Tebuconazol + 20 % BCM s. Tabelle 1.

| Bewertungsschema | | | |
|---|---|---|---|
| Hemmzone in mm | Bewuchs ¹ ) | Beschreibung | Bewertung |
| n bis 1 | kein | mehr als 1 mm Hemmzone, kein Bewuchs mehr | gute Wirkung, ausprägte Hemmzone ² ) |
| 1 bis 0 | kein | bis 1 mm Hemmzone, kein Bewuchs mehr | gute Wirkung ² ) |
| 0 | kein | keine Hemmzone, kein Bewuchs | gute Wirkung ³ ) |
| 0. | schwach | keine Hemmzone, nahezu fehlender Bewuchs | Wirkungsgrenze ungenügend |
| 0.. | mittel | keine Hemmzone, im Vergleich zur Kontrolle etwa auf die Hälfte reduzierter Bewuchs | ungenügend |
| 0... | voll | keine Hemmzone, im Vergleich zur Kontrolle nicht oder nur schwach reduzierter Bewuchs | ungenügend |

| | | | |
|---|---|---|---|
| ¹ ) Mit Bewuchs ist die Bakterien- oder Schimmelpilzbesiedlung im Nährboden bei Bakterien unter bzw. bei Schimmelpilzen auf oder unter dem Prüfling gemeint. | | | |
| ² ) Der Größe der Hemmzone darf nur bedingte Bedeutung geschenkt werden. Eine große Hemmzone kann gewisse Wirkstoffreserven oder eine schwache Fixierung eines Präparates auf dem Substrat anzeigen. | | | |
| ³ ) Bei fehlendem Bewuchs ist die Wirkung trotz fehlender Hemmzone als gut zu bewerten, da die Ausbildung einer Hemmzone eventuell infolge eines geringen Diffusionsvermögens der Wirksubstanz verhindert werden. | | | |

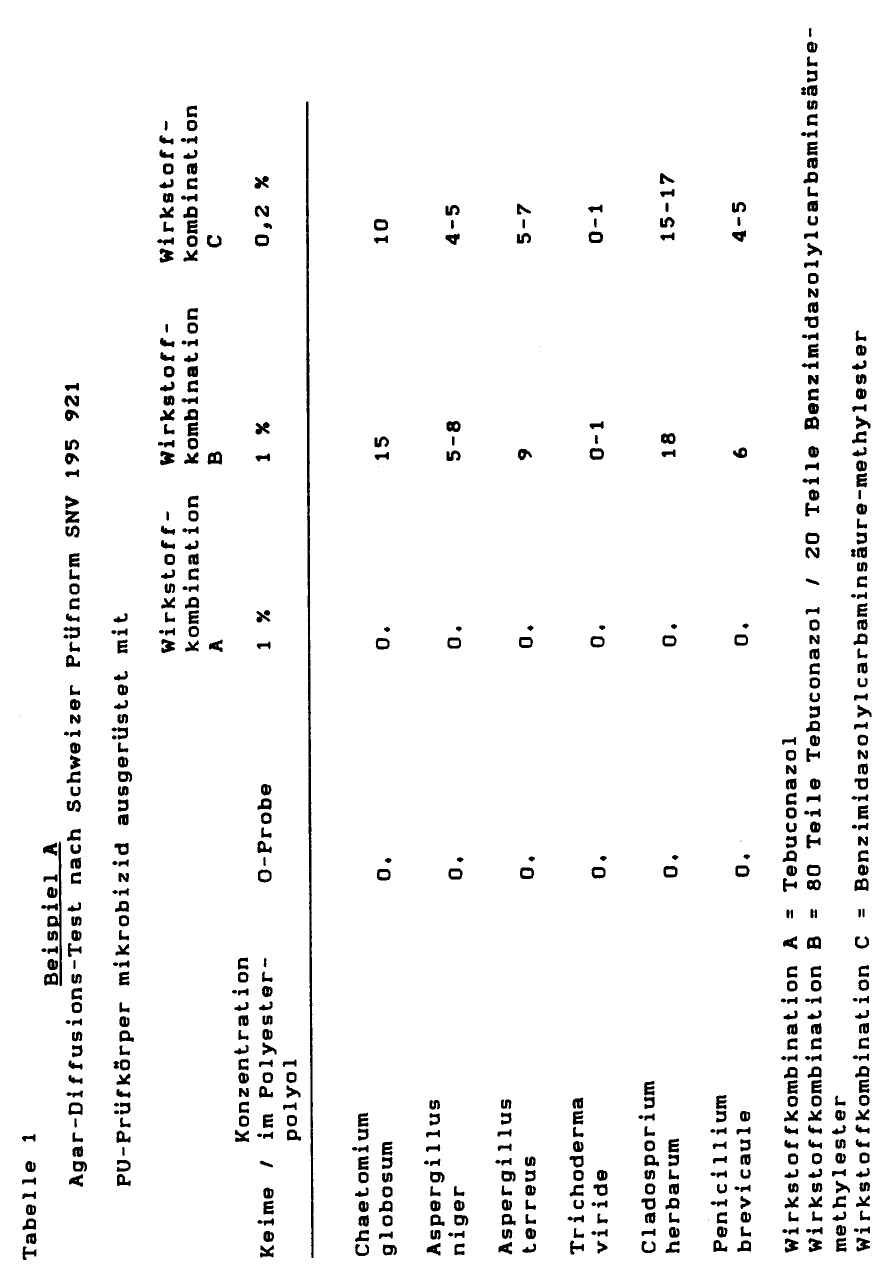

### Beispiel B

1. Synergistisches Fungizidgemisch aus Tebuconazol und 2-(4'-Thiazolyl)-benzimidazol (TBZ)
   80 Gew.-Teile Tebuconazol und 20 Gew.-Teile TBZ werden als Feststoff innig vermischt oder in einer geeigneten Mühle zusammen vermahlen. Es resultiert das synergistische Fingizidgemisch als weißes Pulver.
   Analog können Gemische der übrigen Mischungsverhältnisse der Komponente hergestellt werden.
2. Synergistische Wirksamkeit der erfindungsgemäßen Wirkstoffe gegen kunststoffzerstörende Pilze.
   Die synergistische Wirksamkeit der erfindungsgemäßen Wirkstoffmischungen kann durch den Vergleich mikrobiologischen Wirkung der reinen Wirkstoffe mit den der Gemische erfolgen.
   Herstellung des Prüfmaterials und Durchführung der Prüfung erfolgt analog Beispiel A.
   Das Ergebnis für das synergistische Fungizidgemisch aus 80 % Tebuconazol und 20 % TBZ ist in Tabelle 2 festgehalten.

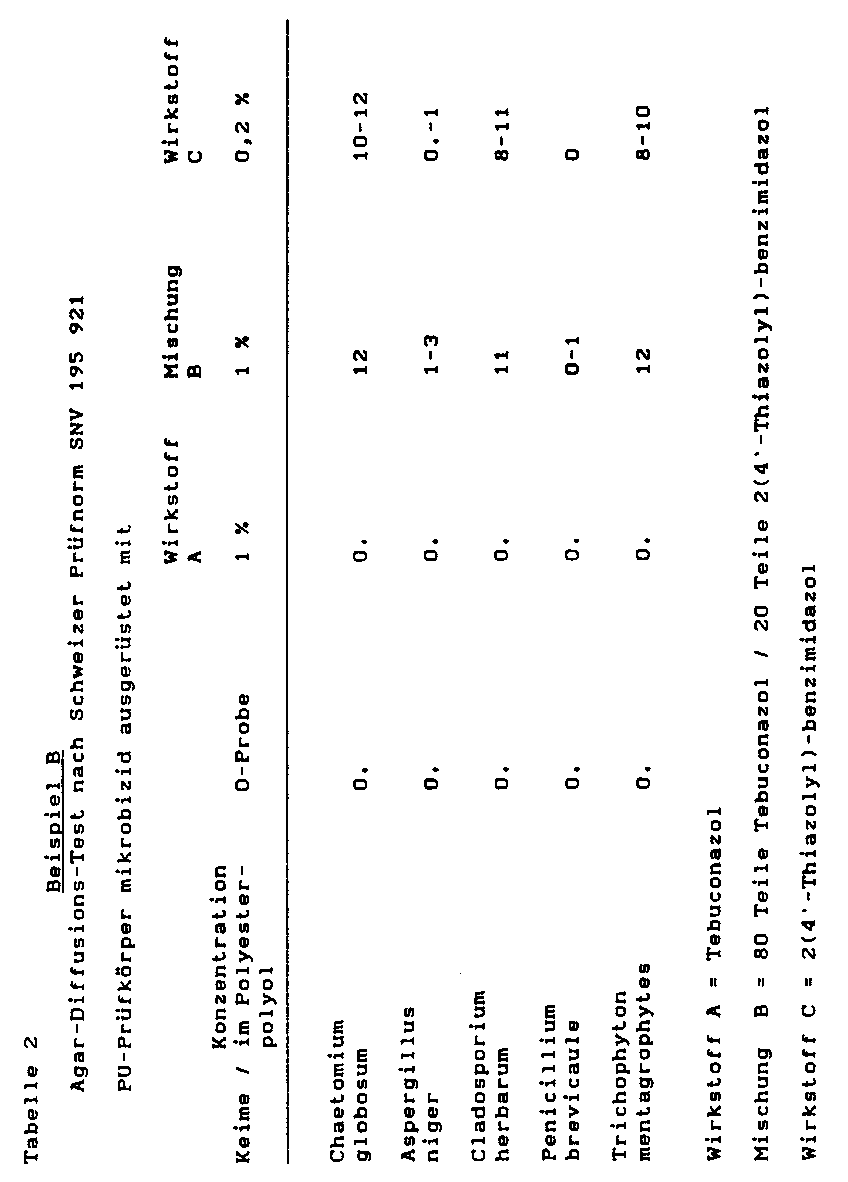

### Beispiel C

1. Synergistisches Fungizidgemisch aus Tebuconazol und 2-(2'-Furyl)-benzimidazol (FBZ)
   80 Gew.-Teile Tebuconazol und 20 Gew.-Teile FBZ werden als Feststoff innig vermischt oder in einer geeigneten Mühle zusammen vermahlen. Es resultiert das synergistische Fungizidgemisch als weißes Pulver.
   Analog können Gemische der übrigen Mischungsverhältnisse der Komponente hergestellt werden.
2. Synergistische Wirksamkeit der erfindungsgemäßen Wirkstoffe gegen kunststoffzerstörende Pilze.
   Die synergistische Wirksamkeit der erfindungsgemäßen Wirkstoffmischungen kann durch den Vergleich mikrobiologischen Wirksamkeit der reinen Wirkstoffe mit den der Gemische erfolgen.
   Herstellung des Prüfmaterials und Durchführung der Prüfung erfolgt analog Beispiel A.
   Das Ergebnis für das synergistische Fungizidgemisch aus 80 % Tebuconazol und 20 % TBZ ist in Tabelle 3 festgehalten.

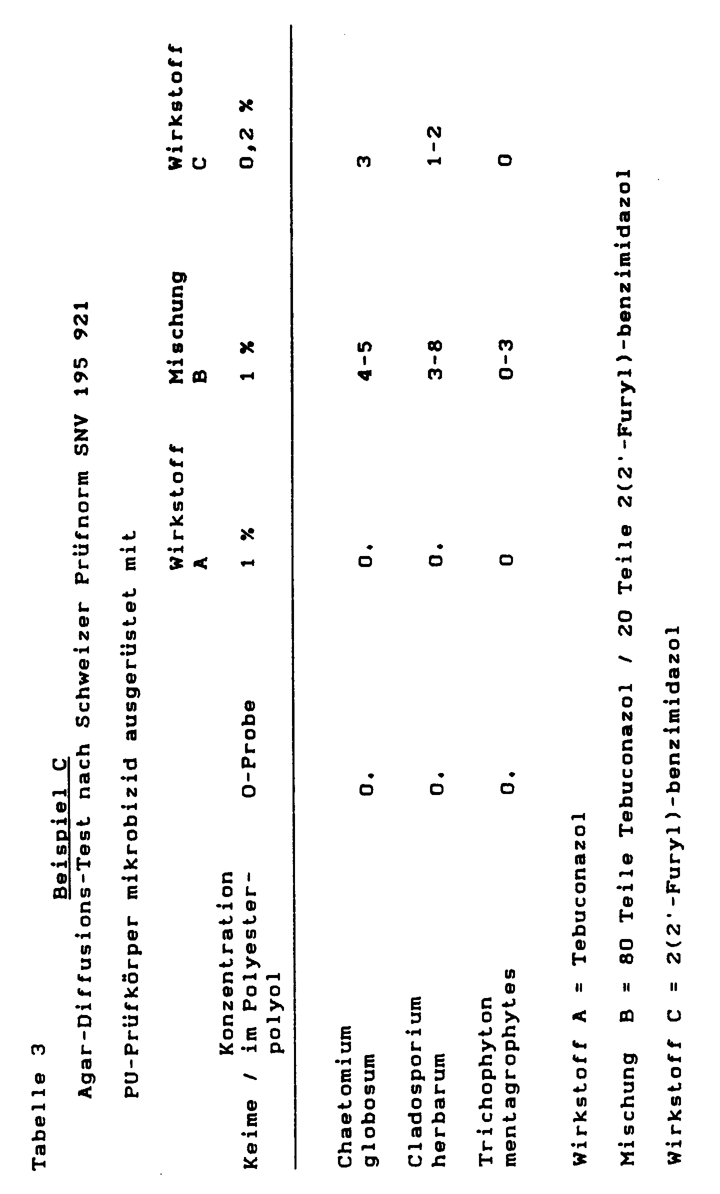

## Patentansprüche

1. Verwendung einer Wirkstoffkombination aus mindestens einem der folgenden Azol-Derivate:
1-(4-Chlorphenoxy)-3,3-dimethyl-1-(1H-1,2,4-triazo-1-yl)-2-butanon, β-(4-Chlorphenoxy-α-(1,1-dimethyl-ethyl)-1H-1,2,4-triazol-1-ethynol, ± α-[2-(4-Chlorphenyl)-ethyl)-α-(1,1-dimethylethyl)]1H-1,2,4-triazol-1-ethanol, (RS)-2-(2,4-Dichlorphenyl)-1-(1H-1,2,4-triazol-1-yl)-hexan-2-ol, 1-(N-propyl-N-(2-(2,4,6-(trichlorphenoxy)-ethyl)-carbamoyl)-imidazol, deren Metallsalze oder Säureadditionsverbindungen und in den Fällen, wo die Verbindung ein asymmetrisches Kohlenstoffatom hat, auch die Isomeren und Isomerengemische der verschiedensten Zusammensetzungen und
mindestens einem Benzimidazol-Derivat der Formel (I) 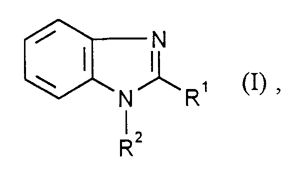 in welcher
R¹ für Carbaminsäureestergruppen, gegebenenfalls substituierte Furyl- oder Thiazolylringe und
R² für H oder Carbaminsäureestergruppen steht,
als Mikrobizide zum Schutz von technischen Materialien.

2. Verwendung einer Wirkstoffkombination aus Tebuconazol und Benzimidazolylcarbaminsäuremethylester als Mikrobizid zum Schutz von technischen Materialien.

3. Verwendung gemäß den Ansprüchen 1 und 2 zum Schutz von Kunststoffen.

4. Verfahren zur Herstellung von Kunststoffen, dadurch gekennzeichnet, daß man eine Wirkstoffkombination aus Tebuconazol und Benzimidazolylcarbaminsäuremethylester als Mikrobizid zum Schutz von technischen Materialien gemäß Anspruch 1 oder 2 oder die einzelnen Wirkstoffkomponenten mit den für die Polymerisation notwendigen Ausgangsstoffen, Lösungsmitteln und/oder Additiven vermischt.

5. Kunststoffe, enthaltend eine Wirkstoffkombination wie in Anspruch 1 definiert.

6. Kunststoffe enthaltend eine Wirkstoffkombination aus Tebuconazol und Benzimidazolylcarbaminsäuremethylester.

## Claims

1. Use of a combination of active compounds composed of at least one of the following azole derivatives:
1-(4-chlorophenoxy)-3,3-dimethyl-1-(1H-1,2,4-triazo-1-yl)-2-butanone, β-(4-chlorophenoxy)-α-(1,1-dimethyl-ethyl)-1H-1,2,4-triazole-1-ethynol, ±α-[2-(4-chlorophenyl)-ethyl)-α-(1,1-dimethylethyl)]-1H-1,2,4-triazole-1-ethanol, (RS)-2-(2,4-dichlorophenyl)-1-(1H-1,2,4-triazol-1-yl)-hexan-2-ol, 1-(N-propyl-N-(2-(2,4,6-(trichlorophenoxy)-ethyl)-carbamoyl)-imidazole, their metal salts or acid addition compounds and in the cases where the compound has an asymmetric carbon atom, also the isomers and mixtures of isomers of the most varied compositions and
at least one benzimidazole derivative of the formula (I) 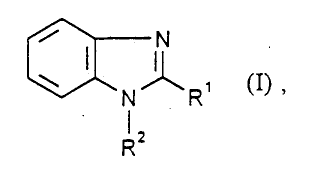 in which
R¹ represents carbamate groups, optionally substituted furyl rings or thiazolyl rings and
R² represents H or carbamate groups,
as microbicides to protect industrial materials.

2. Use of a combination of active compounds composed of tebuconazole and methyl benzimidazolylcarbamate as microbicide to protect industrial materials.

3. Use according to Claims 1 and 2, for the protection of plastics.

4. Process for the preparation of plastics, characterized in that a combination of active compounds composed of tebuconazole and methyl benzimidazolylcarbamate as microbicide to protect industrial materials according to Claim 1 or 2, or the individual active components, are mixed with the starting materials, solvents and/or additives required for the polymerization.

5. Plastics containing a combination of active compounds as defined in Claim 1.

6. Plastics containing a combination of active compounds composed of tebuconazole and methyl benzimidazolylcarbamate.

## Revendications

1. Utilisation d'une combinaison de substances actives consistant en au moins un des dérivés azoliques suivants :
1-(4-chlorophénoxy)-3,3-diméthyl-1-(1H-1,2,4-triazo-1-yl)-2-butanone, β-(4-chlorophénoxy)-α-(1,1-diméthyléthyl)-1H-1,2,4-triazol-1-éthynol, ±-α-[2-(4-chlorophényl)-éthyl]-α-(1,1-diméthyléthyl)]-1H-1,2,4-triazol-1-éthanol, (RS)-2-(2,4-dichlorophényl)-1-(1H-1,2,4-triazol-1-yl)-hexane-2-ol, 1-(N-propyl-N-(2-(2,4,6-(trichlorphénoxy)-éthyl)-carbamoyl)-imidazole, leurs sels métalliques ou dérivés formés par addition avec des acides et, dans les cas où le composé contient un atome de carbone asymétrique, les isomères et mélanges d'isomères aux compositions les plus variées, et
au moins un dérivé benzimidazolique de formule (I) : 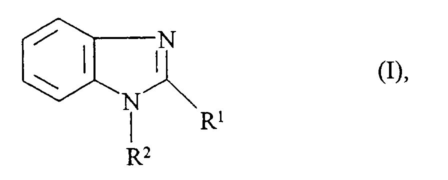 dans laquelle
R¹ représente un groupe ester d'acide carbamique, un cycle furyle ou thiazolyle éventuellement substitué, et
R² représente H ou un groupe ester d'acide carbamique,
en tant que microbicides pour la protection des matériaux techniques.

2. Utilisation d'une combinaison de substances actives consistant en Tebuconazol et benzimidazolylcarbamate de méthyle en tant que microbicide pour la protection des matériaux textiles.

3. Utilisation selon les revendications 1 et 2 pour la protection des résines synthétiques.

4. Procédé de préparation de résines synthétiques, caractérisé en ce que l'on mélange une combinaison de substances actives consistant en Tebuconazol et benzimidazolylcarbamate de méthyle, en tant que microbicide protégeant les matériaux techniques selon la revendication 1 ou 2 ou les composants actifs individuels avec les produits de départ, solvants et/ou additifs nécessaires pour la polymérisation.

5. Résines synthétiques contenant une combinaison de substances actives telle que définie dans la revendication 1.

6. Résines synthétiques contenant une combinaison de substances actives consistant en Tebuconazol et benzimidazolylcarbamate de méthyle.
